Europäisches Patentamt

European Patent Office

Office européen des brevets

(19)

(11) Publication number: **0 031 835**
**B1**

(12) **EUROPEAN PATENT SPECIFICATION**

(45) Date of publication of patent specification: **25.07.84**

(51) Int. Cl.³: **G 01 D 15/18**

(21) Application number: **80901364.2**

(22) Date of filing: **12.06.80**

(86) International application number:
**PCT/US80/00742**

(87) International publication number:
**WO 81/00151 22.01.81 Gazette 81/2**

(54) **STACKED DROP GENERATORS FOR PULSED INK JET PRINTING.**

(30) Priority: **09.07.79 US 55969**

(43) Date of publication of application:
**15.07.81 Bulletin 81/28**

(45) Publication of the grant of the patent:
**25.07.84 Bulletin 84/30**

(84) Designated Contracting States:
**CH DE FR GB LI NL SE**

(56) References cited:
**FR - A - 2 122 148**
**FR - A - 2 256 034**
**US - A - 3 211 088**
**US - A - 4 166 277**

(73) Proprietor: **BURROUGHS CORPORATION**
**Burroughs Place**
**Detroit, Michigan 48232 (US)**

(72) Inventor: **SNIDERMAN, Albert**
**7123 Pebble Park Drive**
**West Bloomfield, MI 48033 (US)**

(74) Representative: **Kirby, Harold Douglas Benson**
**et al,**
**G.F. Redfern & Company Marlborough Lodge 14**
**Farncombe Road**
**Worthing West Sussex BN11 2BT (GB)**

Courier Press, Leamington Spa, England.

## Description

Background of the Invention
1. *Technical Field of the Invention*

The present invention relates to an improved stackable drop generator for use in a stacked array of drop generators for ink jet printing, the drop generator including a driver which is deformably responsive to the application between first and second electrodes coupled thereto of a first change in electrical polarity to create a pressure wave in a fluid in a cavity to expel a droplet of the fluid from a nozzle having a tapered portion, and deformably responsive to the application of a second change in electrical polarity to create a vacuum for the withdrawal of the fluid from the nozzle and comprising a stackable housing for said cavity. The present invention otherwise relates to FR—A—2,122,148 which discloses a stackable ink drop generator in the same technical field.

2. *Description of the Prior Art*

Prior Art generators for ink jet printing were bulky in size compared to the drop size produced. Consequently, the number of drop generators per printed character was physically limited. However, instead of decreasing the drop generator size to achieve closer spacing between ink drops, prior ink jet printers reduce the space between drops by increasing the size of the drop. As a result of the larger drop size, character definition and print quality are lessened.

Many ink jet printers have failed to successfully address the problem of fluid dribbling from the exit port once the jet has been energised to expel ink. The fluid, under static pressure in the ink reservoir and awaiting expulsion, was under no restraining force to inhibit leakage out of the exit port.

FR—A—2,122,148 teaches the art of employing a plurality of ink drop generators in an array for printing. The apparatus of the present invention seeks to make an improvement thereover by providing means whereby a plurality of generators in an array can be of an indefinitely large number, fed with ink from a common well via a common feed channel, and simplified in electrical connection by a substantial halving of the required number of electrodes used in the array.

FR—A—2,256,034 teaches the art of employing an indefinitely large number of ink drop dispensers in an array fed from a common ink reservoir, with the ink being withdrawn from the droplet-emitting orifice by a positive meniscus formed against non-wetting material. The present invention seeks to provide an improvement thereover.

The present invention consists in an ink drop generator of the type described characterised by the housing being electrically non-conducting and having said nozzle integral therewith, and electrically conducting first wall stackable against a first side of said housing for defining a first side of said cavity and an electrically conducting second wall stackable against a second side of said housing for defining a second side of said cavity, where said first and second electrodes comprise respectively said first and second walls and where, in said array, said first wall is employable as the second wall in a first neighbouring generator in said array and said second wall is employable as the first wall in a second neighbouring generator in said array, said housing comprising a trough for said fluid, through penetrative of said housing and of said first and second walls and in communication with said cavity for the replenishment of said fluid, for use in alignment with the troughs in the neighbouring generators in said array.

The present invention promotes printed character definition and quality by utilizing the small size of the drop generator. More generators may be stacked to print each character. This feature permits a smaller drop size, better defined characters, and improved printing quality. In addition, the invention uses a deformable device to generate a pressure wave pulse through the printing fluid or ink. This wave expels a drop of fluid from a fluid filled cavity through an exit port. A reverse deformation of the device is then induced to withdraw the fluid at the exit port back into the fluid cavity. Consequently, an ink drop is generated and expelled on demand and ink dribbling from the exit port between drop generations is inhibited.

Brief Summary of the Invention

A stackable drop generator for ink jet printing includes a stackable housing of electrically non-conductive material having a cavity containing fluid, an ink trough alignable with each housing for supplying the cavity with fluid, and holes which, when aligned, receive fastening devices for stacking multiple drop generators. In one form of the invention a piezoelectric ceramic driver is used to produce a pressure wave on the fluid and is located in the cavity of the housing. The driver is bidirectionally deformable in response to changing polarities of electrical pulses received from electrodes. These electrodes also have an ink trough and holes for receiving fastening devices which are alignable with the corresponding ink trough and holes in the housing when multiple drop generators are stacked. An end plate, having an ink supply well, is engageable with one end of a drop generator to store a volume of fluid. This fluid is fed to the ink trough of each housing in a stack of drop generators to flood each fluid cavity. An end plate without an ink well engages the opposite end of, and prevents fluid leakage from the drop generator.

In another form of the invention a bimorph driver is used to produce a pressure wave on the fluid. The bimorph is positioned outside the fluid cavity of the housing and acts on a diaphragm wall of the housing.

To permit one electrode to transmit electrical pulses to two adjacent drivers, each driver is alternately poled with respect to its adjacent driver in an adjacent drop generator. Upon application of an electrical pulse to a driver, a positive or negative deformation of the driver is produced, depending on the polarity of the pulse, and a corresponding pressure wave acts on the fluid of the cavity. In response to a positive driver deformation, a fluid drop of ink is expelled from the housing through a nozzle. This nozzle is integral with the housing and has an intake end in the cavity and forms an exit port from the housing for the ink drop. A negative driver deformation imparts a low pressure wave which withdraws the fluid into the cavity from the exit port of the nozzle to prevent dribbling of the fluid out of the nozzle. In addition to this negative deformation, the nozzle is composed of a non-wetting material, which inhibits fluid dribbling from the exit port.

Brief Description of the Drawings

Figure 1 is an exploded, isometric view of a drop generator apparatus embodying the present invention;

Figure 2 is a front view of a drop generator with the fluid in a steady state position;

Figure 2A is a sectional view of the drop generator in Figure 2 taken along line 2A—2A;

Figure 2B is a sectional view of the drop generator in Figure 2 taken along line 2B—2B;

Figure 3 is a sectional top view of several stacked drop generators of the type shown in Figure 2;

Figure 4 is an assembled, front view of a stacked drop generator apparatus;

Figure 5 depicts a drop generator with a driver deformed to expel an ink drop from the exit port of the nozzle;

Figure 6 depicts a drop generator with a driver deformed to withdraw ink from the exit port of the nozzle into the fluid cavity;

Figure 7 illustrates representative electrical pulses to cause the driver of the drop generator to deform;

Figure 8A is a side view of another type of drop generator embodying the present invention with the fluid in a steady state position;

Figure 8B is a sectional view of the drop generator taken along line 8B—8B with the addition of electrode 34'; and

Figure 9 is a sectional top view of several stacked drop generators of the type shown in Figure 8A.

Detailed Description of the Invention

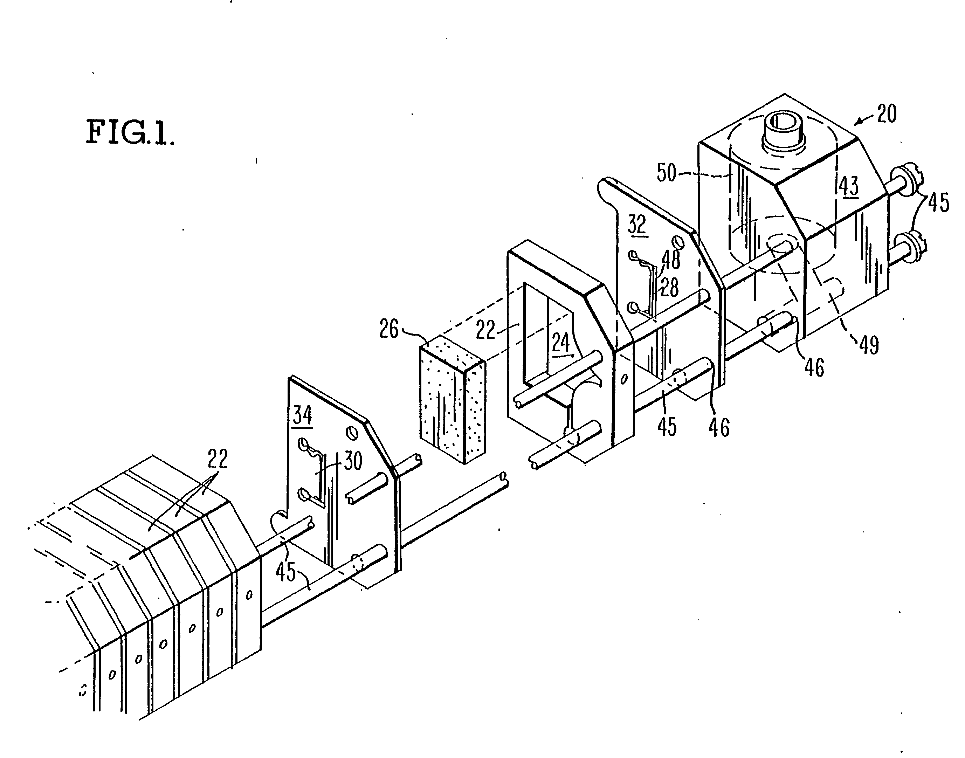

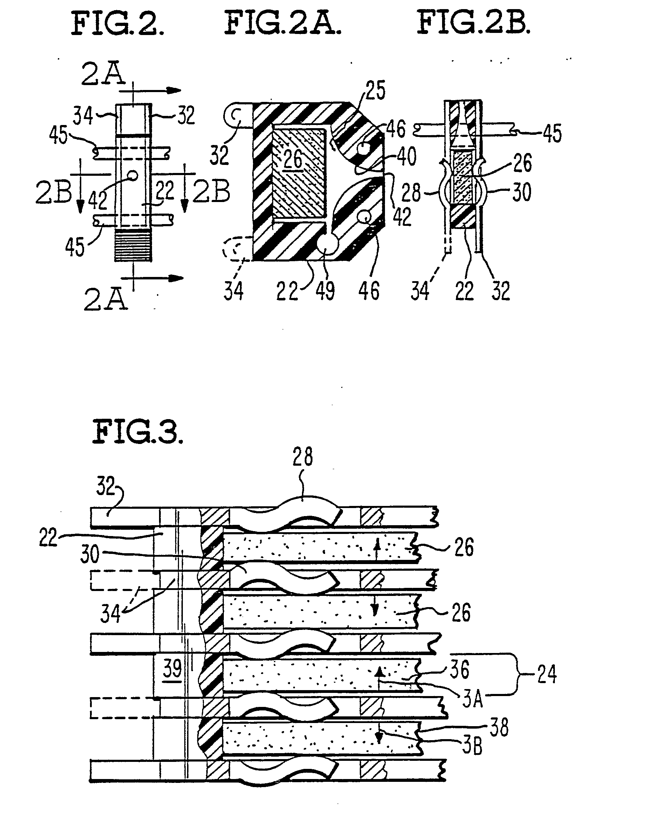

Referring to Figure 1, a drop generator apparatus 20 for ink jet printing includes a housing 22 of electrically nonconductive material enclosing a cavity 24 filled with printing fluid 25 (Figure 2A). Insertable in cavity 24 for generating pressure waves in the fluid 25 is a driver 26 made of piezoelectric ceramic material which deforms in response to applied electrical pulses. The driver 26 is about 0.013 cm thick to allow the fluid drops to be closely spaced adjacent one another for good print definition. The driver 26 (Figure 3) within the cavity 24 is contacted on adjacent sides by spring contacts 28 and 30 in electrodes 32 and 34, respectively. Preferably, the electrodes 32 and 34 separate adjacent cavities 24 by about .008 cm. The driver 26 is secured to the rear of housing 22 by an adhesive or other suitable means. The orientation of the spring contacts allows each electrode to contact two drivers and transmit an electrical pulse of the same polarity to the adjacent sides 36 and 38 (Figure 3) of two drivers 26. Therefore, alternate poling of drivers 26 in the directions of arrows 3A and 3B is implemented to permit a single electrode to contact two drivers 26. To prevent torquing of the drivers 26 due to electrical pulses being transmitted to drivers 26 through spring contacts 28 and 30, the spring contacts abut driver 26 at equal distances from the housing base 39. To provide a passage out of housing 22 for the ink fluid 25, a nozzle 40 (Figure 2A), is integrally formed in housing 22, has an intake end 41 adjacent the cavity 24 and an exit port 42.

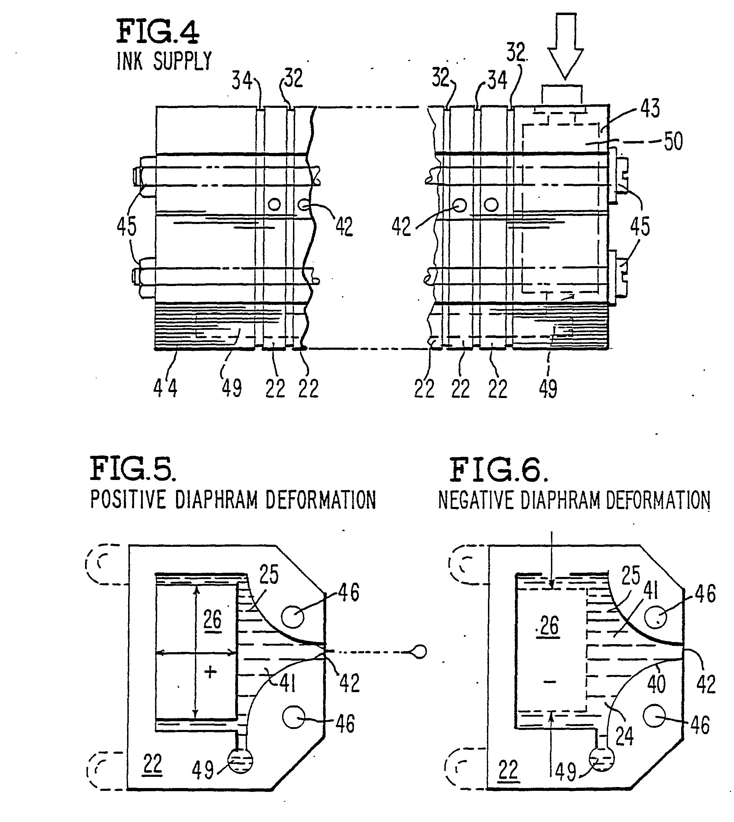

A complete drop generator apparatus 20 is sealed to prevent fluid leakage through spring apertures 48 by fastening end plates 43 and 44 (Figures 1 and 4) over the outside electrode 32 and electrode 34 respectively. The bolts 45 pass through the apertures 46 (Figure 1) to secure the drop generator apparatus 20. An ink trough 49 (Figures 2A and 4) extends along the length of the stacked drop generator apparatus 20 due to matching holes in each electrode and housing to supply each cavity 24 with fluid. The trough 49 is fed by a volume of fluid stored in an ink supply well 50 located in end plate 43.

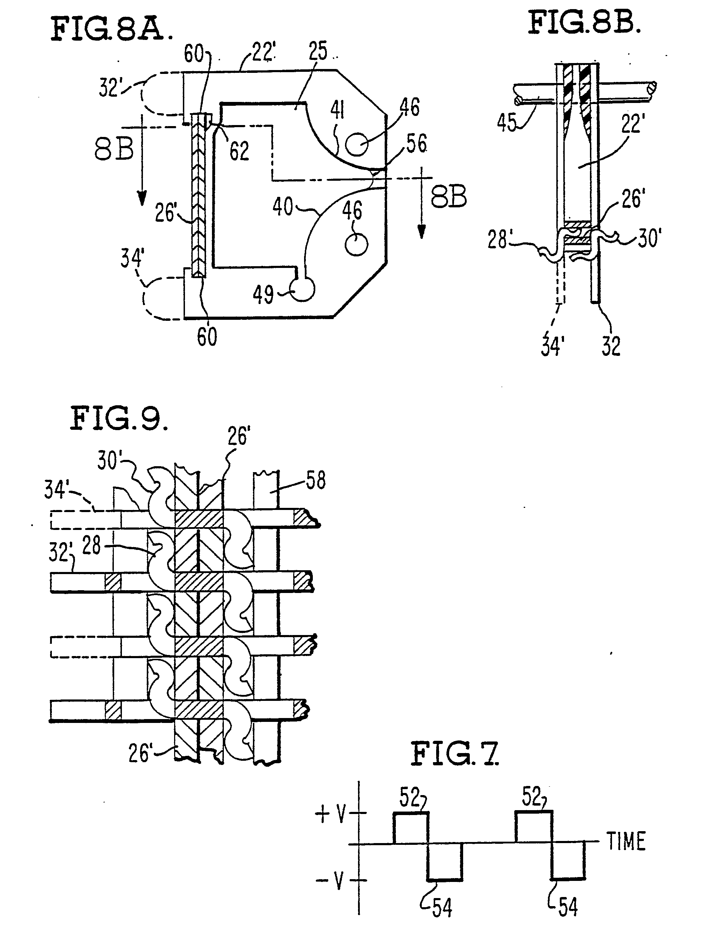

As shown in Figure 5, a fluid drop is expelled on demand from a housing 22 by a positive deformation of driver 26. Electrodes 32 and 34 transmit a positive voltage pulse 52 illustrated in Figure 7 through the spring contacts 28 and 30 of the electrodes to deform the piezoelectric ceramic driver orthogonally to the electrodes. The positive driver deformation illustrated in Figure 5 produces a high pressure wave on the fluid 25 in the cavity 24. The wall of the cavity 24 adjacent the nozzle 40 has an exponential horn configuration and directs the pressure wave acting on the fluid 25 toward the nozzle 40. Following the positive voltage pulse 52, a negative voltage pulse 54 (Figure 7) is applied to electrodes 32 and 34 which negatively deforms driver 26 as illustrated in Figure 6 to produce a low pressure wave and withdraw the fluid at the exit port 42 of the nozzle 40 back toward the intake end of the nozzle.

The housing 22 is formed from a material which is non-wetting with respect to the fluid 25 being used for printing. The preferred material for the housing 22 is a fluorocarbon resin, particularly polytetrafluoroethylene (TEFLON) or in the alternative fluorinated ethylene propylene or fluorocarbon copolymers. As a result, the fluid 25 forms a convex meniscus 56 positioned inside the exit port 42 of the nozzle 40, under steady state conditions. The non-wetting surface of the housing 22 causes the meniscus 56 of the fluid to remain inside the nozzle 40 and thus prevents fluid dribbling on the face of the housing. If the housing 22 is formed from a wetting material a concave meniscus would result and the fluid would be drawn out of the nozzle 40 by capillary action with resultant fluid dribbling. The action of the driver 26 under negative deformation produces a low pressure wave on the fluid 25 and withdraws the fluid back into the nozzle in order to quickly return the fluid to the steady state condition with the meniscus 56 inside the nozzle. This feature is a further aid to prevent fluid dribbling.

The meniscus 56 of fluid is positioned sufficiently inside the nozzle 40 that minor pressure variations in the fluid will not expel the fluid from the nozzle. However, the meniscus 56 is sufficiently close to the exit port 42 of the nozzle that the action of the driver 26 produce a high pressure wave will expel fluid from the exit port of the nozzle. The position of the meniscus can be varied by changing the shape of the cavity 24 adjacent the nozzle to constrict or enlarge the approach to the nozzle. Additionally, the position can be varied by changing the properties of the fluid 25 being used as a printing ink.

Another form of drop generator embodying the present invention is illustrated in Figures 8A, 8B and 9. In these figures the same numerals are used to identify unchanged elements while numerals with a prime superscript are used to identify modified elements. The modified drop generator utilizes a driver 26' which is positioned outside the cavity 25 on a diaphragm wall 58 of the housing 22'. The driver 26' is retained in grooves 60 formed in the housing 22' and can be affixed with a suitable adhesive to the diaphragm wall 58. The driver 26' is preferably a bimorph in order that large deflections can be achieved upon the application of positive and negative pulses.

The electrode 34' has a spring contact 28' which passes behind a convolution 62 in the diaphragm wall 58 to engage the rear of the bimorph driver 26'. The electrode 32' has a spring contact 30' which engages the front of the bimorph driver 26'.

The operation of the bimorph driver 26' is similar to the operation of the piezoelectric driver 26. A positive voltage pulse is applied to the bimorph driver 26' causing the driver to bow and flex the diaphragm wall 58 inward toward the nozzle 40 and expel fluid from the exit port 42. A negative pulse is then applied to the driver 26' causing the driver to bow in an opposite direction and flex the diaphragm wall 58 outward away from the nozzle 40 and withdraw the fluid 25 into the cavity 24.

Thus, it can be seen that the bimorph driver 26' functions to expel and withdraw fluid through the nozzle 40 in a manner which is equivalent to the operation of the piezoelectric driver 26'. One advantage to the exterior positioning of the bimorph driver 26' is that the fluid 25 does not interact with the driver. Consequently, the properties of the fluid 25 can be chosen without regard to whether the particular fluid will interact either chemically or electrically with the driver.

Figure 9 illustrates how the drop generators can be arranged so that the electrode 32' and the electrode 34' are able to contact a driver on either side of the electrode. The bimorph drivers 26' are positioned so that the polarity of adjacent drivers is opposite. This configuration achieves the same function as the arrangement of drop generators shown in Figure 3.

To permit the use of more drop generators than available with the prior art, the individual drop generators forming the apparatus 20 have been made thin, stackable, and sequentially addressable to print a well defined, predetermined, quality character.

A stack of ten drop generators arranged in a vertical array can be movably mounted as a print head in a page printer and caused to traverse a page horizontally. Selective activation of the vertical array of drop generators as the print head traverses a horizontal page would result in characters being printed on the page. In another application of the present invention an array of three groups of ten drop generators can be used to form a three-line check or document endorser. In this application the array of drop generators remains fixed while the check or document is moved past the array. In both applications, the array of drop generators functions as a dot matrix printer. Consequently, a wide variety of character fonts can be achieved and the array has graphics printing capability. The electronic control for a dot matrix printer is well known in the art and can be implemented by a person having ordinary skill in the art.

**Claims**

1. A stackable drop generator (20) for use in a stacked array of drop generators (20) for ink jet printing, said drop generator (20) including a driver (26) deformably responsive to the application between first and second electrodes (32, 34) coupled thereto of a first change in electrical polarity to create a pressure wave in a fluid (25) in a cavity (24) to expel a droplet of said fluid (25) from a nozzle (40) having a tapered portion and deformably responsive to the application of a second change in electrical polarity to create a vacuum for the withdrawal of said fluid (25) from said nozzle (40) and comprising a stackable housing (22) for said cavity, said generator (20) being characterised by comprising: the housing (22) being electrically nonconducting and having said nozzle (40) integral therewith, an electrically conducting first wall (32) stackable against a first side of said housing (22) for defining a first side of said cavity (24) and an electrically conducting second wall (34) stackable against a second side of said housing (22) for defining a second side of said cavity (24), where said first and said second electrodes (32, 34) comprise respectively said first and said second walls (32, 34) and where, in said array, said first wall (32) is employable as the second wall (34) in a first neighbouring generator (20) in said array and said second wall (34) is employable as the first wall (32) in a second neighbouring generator (20) in said array, said housing (22) comprising a trough (49) for said fluid, through-penetrative of said housing (22) and of said first and second walls (32, 34) and in communication with said cavity (24) for the replenishment of said fluid (25), for use in alignment with the troughs (49) in the neighbouring generators (20) in said array.

2. A generator (20) according to claim 1 characterised by said first and second walls (32, 34) comprising apertures (46) being alignable with the aperture (46) in the neighbouring generators (20) in said array to allow the passing in common therethrough of a bolt (45) for clamping together the generators (20) in said array.

3. A generator (20) according to claim 1 characterised by said trough (49) being in aligned communication with the troughs (49) in the neighbouring generators (20) in said array to form a common channel for receiving said fluid (25) from a common supply well (50).

4. A generator (20) according to any of the preceding claims characterised by said driver (26) deformably responsive to said first and second changes in electrical polarity comprising a bi-directionally deformable wafer (26) of material located in said cavity (24).

5. A generator (20) according to claim 4 characterised by said bi-directionally deformable wafer (26) of material comprising a piezoelectric ceramic driver (26) and further characterised by said piezoelectric ceramic driver (26) being alternately poled with respect to the driver (26) of an adjacent generator (20) in said array so that each of said first and second electrodes (32), 34) provides electrical stimulus to two adjacent drivers (26) in said array.

6. A generator (20) according to claim 4 or 5 characterised by said first wall (32) comprising a first spring contact (28) for providing electrical contact with a first side of said wafer (26) and by said second wall (34) comprising a second spring contact (30) for providing electrical contact with a second side of said wafer (26).

7. A generator (20) according to claim 6 characterised by said wafer (26) being fixed within said housing (22) in said cavity (24) on a face thereof remote from said nozzle (40).

8. A generator (20) according to any of the preceding claims characterised by said nozzle (40) comprising as said tapered portion a tapered intake end (41) in said cavity (24) for concentrating said pressure wave and an exit port (42) at the end of said tapered intake end (41) for the expulsion therethrough of said droplet.

9. A generator (20) according to claim 8 characterised by said nozzle (40) comprising a non-wetting material to inhibit said fluid (25) from dribbling from said exit port (42).

10. A generator (20) according to claim 9 wherein said non-wetting material is a flurocarbon resin.

11. A generator (20) according to claim 8, 9 or 10 characterised by said tapered intake end (41) having the contour of an exponential horn.

12. A generator (20) according to any of claims 1—3 characterised by said first wall (32) being adapted to stack upon a first end plate (44) when said generator (20) is the extreme one at a first end of said array for the prevention of the loss of said fluid (25) from said first end of said array, and by said second wall (34) being adapted to stack against a second end plate (43) when said generator (20) is the extreme one at the second end of said array for the prevention of the loss of said fluid (25) from said second end of said array.

13. A generator (20) according to claim 12 characterised by said common supply well (50) being integral with said second end plate (43).

**Revendications**

1. Générateur de gouttes empilable (20), applicable comme réseau empilable de générateurs de gouttes (20) pour l'impression à jet d'encre, le générateur de gouttes (20) comprenant un moyen d'entraînement (26) répondant par déformation à l'application entre une première et une seconde électrode (32, 34) qui lui sont couplées d'une première variation de polarité électrique pour créer une onde de pression dans un fluide (25) dans la cavité (24) pour expulser une goutte du fluide (25) par la buse (40) ayant une partie conique et déformable en réponse à l'application d'une seconde variation de polarité électrique pour créer un vide et rappeler le fluide (25) de la buse (40) et comprenant un boîtier empilable (22) pour la cavité, le générateur (20) étant caractérisé en ce qu'il se compose d'un boîtier (22) en matière électrique non conductible et ayant une buse (40) faisant corps avec lui, une première paroi conductrice d'électricité (32) empilable par rapport à une première face du boîtier (22) pour définir un premier côté de la cavité (24) et une seconde paroi conductrice électrique (34) empilable contre une seconde face du boîtier (22) pour définir un second côté de la cavité (24), la première et la seconde électrode (32, 34) formant respectivement la première et la seconde paroi (32, 34) et dans le réseau, la première paroi (32) est utilisable comme seconde paroi (34) dans un premier générateur voisin (20) dans le réseau et la seconde paroi (34) est utilisable comme première (32) dans un second générateur voisin (20) dans le réseau, le boîtier (22) se composant d'une auge (49) pour le fluide, traversant le boîtier (22) et la première et la seconde paroi (32, 34) et communiquant avec la cavité (24) pour le remplissage du fluide (25), pour l'utilisation dans l'alignement avec les auges (49) des générateurs voisins (20) du réseau.

2. Générateur (20) selon la revendication 1, caractérisé par la première et la seconde paroi (32, 34) comprenant des ouvertures (46) susceptibles d'être alignées avec l'ouverture (46) des générateurs voisins (20) du réseau pour permettre le passage en commun à travers ceux-ci d'une vis (45) pour serrer entre eux les générateurs (20) du réseau.

3. Générateur selon la revendication 1, caractérisé par l'auge (49) qui est alignée en communication avec les auges (49) des générateurs voisins (20) du réseau pour former un canal commun pour recevoir le fluide (25) d'une source d'alimentation commune (50).

4. Générateur (20) selon l'une quelconque des revendications précédentes, caractérisé par le moyen d'entraînement (26) répondant par déformation à une première et à une seconde variation de polarité électrique, comprenant une plaquette (26) déformable de façon bidirectionnelle en une matière située dans la cavité (24).

5. Générateur (20) selon la revendication 4, caractérisé par la plaquette (26) déformable de façon bidirectionnelle en matière se compose d'un moyen d'entraînement (26) en céramique piézo-électrique et en outre caractérisé par le moyen d'entraînement en matière céramique piézo-électrique (26) polarisé en alternance par rapport au moyen d'entraînement (26) du générateur adjacent (20) du réseau de façon que chacune des première et seconde électrode (32, 34) donne une stimulation électrique aux deux moyens d'entraînement (26) adjacents du réseau.

6. Générateur (20) selon la revendication 4 ou 5, caractérisé par la première paroi (32) formée d'un premier contact à ressort (28) donnant un contact électrique avec une première face de la plaquette (26) et par une seconde paroi (34) composée d'un second contact de ressort (30) pour donner le contact électrique avec la seconde face de la plaquette (26).

7. Générateur (20) selon la revendication 6, caractérisé en ce que la plaquette (26) est fixée dans le boîtier (22), dans la cavité (24) sur une face de celle-ci éloignée de la buse (40).

8. Générateur (20) selon l'une quelconque des revendications précédentes, caractérisé par la buse (40) formée comme la partie conique d'une entrée conique (41) dans la cavité (24) pour concentrer l'onde de pression et d'une orifice de sortie (42) à l'extrémité de l'extrémité d'entrée conique (41) pour expulser à travers celle-ci la gouttelette.

9. Générateur (20) selon la revendication 8, caractérisé en ce que la buse (40) est en une matière non mouillante pour interdire au fluide (25) de suinter par l'orifice de sortie (42).

10. Générateur (20) selon la revendication 9, caractérisé en ce que le matériau non mouillant est une résine fluorocarbonée.

11. Générateur (20) selon la revendication 8, 9 ou 10, caractérisé par l'extrémité d'entrée conique (41) ayant le contour d'une corne exponentielle.

12. Générateur selon l'une des revendications 1—3, caractérisé par la première paroi (32) adaptée à s'empiler sur une première plaque d'extrémité (44) lorsque le générateur (20) est le générateur extrême ayant une première extrémité du réseau pour éviter la perte de fluide (25) par la première extrémité du réseau et la seconde paroi (34) est adaptée à s'empiler contre une seconde plaque d'extrémité (43) lorsque le générateur (20) est un générateur extrême à la seconde extrémité du réseau pour éviter la perte de fluide (25) de la seconde extrémité du réseau.

13. Générateur (20) selon la revendication 12. caractérisé par une source d'alimentation commune (50) faisant corps avec la seconde plaque d'extrémité (43).

**Patentansprüche**

1. Stapelbarer Tropfengenerator (20) für eine Stapelanordnung geschichteter Tropfengeneratoren (20) zum Tintenspritzdrucken, bei der der Tropfengenerator (20) einen Treiber (26), der bei Anlegen eines ersten elektrischen Polaritätswechsels zwischen mit ihm verbundene erste und zweite Elektroden (32, 34) verformt wird, um eine Druckwelle in einer in einem Hohlraum (24) befindlichen Flüssigkeit (25) zum Ausstossen eines Tröpfchens der Flüssigkeit (25) aus einer Düse (40) zu erzeugen, wobei die Düse (40) einen sich verjüngenden Abschnitt aufweist und bei Anlegen eines zweiten elektrischen Polaritätswechsels verformbar ist, um eine Vakuum zum Zurückziehen der Flüssigkeit (25) aus der Düse (40) zu erzeugen, und ein stapelbares Gehäuse (22) für den Hohlraum enthält, dadurch gekennzeichnet, daß das Gehäuse (22) des Generators (20) elektrisch nichtleitend ist und die Düse (40) in dem Gehäuse so ausgebildet ist, daß eine elektrisch leitfähige erste Wand (32) auf eine erste Seite des Gehäuses (22) zur Bildung einer ersten Seite des Hohlraumes (24) und eine elektrisch leitfähige zweite Wand (34) gegen eine zweite Seite des Gehäuses (22) zur Bildung einer zweiten Seite des Hohlraumes (24) aufsteckbar ist, wobei die erste und zweite Elektrode (32, 34) die erste und zweite Wand (32, 34) umfaßt und wobei in der Stapelanordnung die erste Wand (32) als zweite Wand (34) eines ersten benachbarten Generators (20) und die zweite Wand (34) als erste Wand (32) eines zweiten benachbarten Generators dient, und daß das Gehäuse (22) einen Kanal (49) für die Flüssigkeit enthält, der das Gehäuse (22) und die erste und zweite Wand (32, 34) durchdringt und mit dem Hohlraum (24) zum Auffüllen der Flüssigkeit (25) verbunden und mit den Kanälan (49) der benachbarten Generatoren (20) in der Stapelanordnung ausgerichtet ist.

2. Tropfengenerator (20) nach Anspruch 1, dadurch gekennzeichnet, daß die erste und zweite Wand (32, 34) Öffnungen (46) aufweisen, die mit den Öffnungen (46) der benachbarten Generatoren (20) in der Stapelanordnung fluchten und zur Aufnahme eines gemeinsam hindurchgesteckten Bolzens (45) zum Zusammenspannen der Generatoren (20) in der Stapelanordnung dienen.

3. Tropfengenerator (20) nach Anspruch 1, dadurch gekennzeichnet, daß der Kanal (49) fluchtend mit den Kanälan (49) der benachbarten Generatoren in der Stapelanordnung in Verbindung steht und einem gemeinsamen kanal zur Aufnahme der Flüssigkeit (25) aus einem gemeinsamen Versorgungsbehälter (50) dient.

4. Tropfengenerator (20) nach einem der vorstehenden Ansprüche, dadurch gekennzeichnet, daß der Treiber (26) auf einen ersten und zweiten Wechsel der elektrischen Polarität verformt wird und eine bidirektional verformbare Platte (26) aus einem in dem Hohlraum (24) angeordneten Material aufweist.

5. Tropfengenerator (20) nach Anspruch 4, dadurch gekennzeichnet, daß die bidirektional verformbare Platte (26) aus einem piezoelektrischen, keramischen Treiber (26) besteht, und daß der piezoelektrische, keramische Treiber (26) wechselweise im Hinblick auf den Treiber (26) eines benachbarten Generators (20) in der Stapelanordnung gepolt wird, so daß jede erste und zweite Elektrode (32, 34) einen elektrischen Antrieb für zwei benachbarte Treiber (26) in der Stapelanordnung darstellt.

6. Tropfengenerator (20) nach Anspruch 4 oder 5, dadurch gekennzeichnet, daß die erste Wand (32) einen ersten Federkontakt (28) enthält, der einen elektrischen Kontakt mit der ersten Seite der Platte (26) herstellt, und daß die zweite Wand (34) einen zweiten Federkontakt (30) enthält, der einen elektrischen Kontakt mit einer zweiten Seite der Platte (26) herstellt.

7. Tropfengenerator (20) nach Anspruch 6, dadurch gekennzeichnet, daß die Platte (26) innerhalb des Gehäuses (22) in dem Hohlraum (24) an einer der Düse (40) gegenüberliegenden Fläche befestigt ist.

8. Tropfengenerator (20) nach einem der vorstehenden Ansprüche, dadurch gekennzeichnet, daß die Düse (40) als verjüngten Abschnitt ein verjüngtes Zulaufende (41) in dem Hohlraum (24) zum Konzentrieren der Druckwelle und eine Ausgangsöffnung (42) am Ende des verjüngten Zufuhrendes (41) zum Ausstossen der Tröpfchen enthält.

9. Tropfengenerator (20) nach Anspruch 8, dadurch gekennzeichnet, daß die Düse (40) aus einem nicht benetzbaren Material besteht, das eine Abtropfen der Flüssigkeit (25) von der Ausgangsöffnung (42) verhindert.

10. Tropfengenerator (20) nach Anspruch 9, dadurch gekennzeichnet, daß das nicht benetzbare Material aus einem Fluorkohlenstoff-Harz besteht.

11. Tropfengenerator (20) nach Anspruch 8, 9 oder 10, dadurch gekennzeichnet, daß das sich verjüngende Zufuhrende (41) den Verlauf eines exponentiellen Horns aufweist.

12. Tropfengenerator (20) nach einem der Ansprüche 1 bis 3, dadurch gekennzeichnet, daß die erste Wand (32) auf eine erste Endplatte (44) gesteckt ist, wenn der Tropfengenerator (20) am äußersten einen Ende der Stapelanordnung vorgesehen ist, damit keine Flüssigkeit (25) aus dem ersten Ende der Anordnung entweichen kann, und daß die zweite Wand (34) auf eine zweite Endplatte (43) gesteckt ist, wenn der Tropfengenerator (20) am äußersten anderen Ende der Stapelanordnung vorgesehen ist, damit keine Flüssigkeit (25) aus dem zweiten Ende der Stapelanordnung entweichen kann.

13. Tropfengenerator (20) nach Anspruch 12, dadurch gekennzeichnet, daß ein gemeinsamer Versorgungsbehälter (50) Bestandteil der zweiten Endplatte (43) ist.

FIG.1.

# FIG.2.  FIG.2A.  FIG.2B.

# FIG.3.

2

# FIG.4
INK SUPPLY

34 32 32 32 32 34

43

50

45 42 42 45

44 49 22 22 22 22 22 49

# FIG.5.
POSITIVE DIAPHRAM DEFORMATION

25

46

$\underline{26}$

$+$

41 42

46

$\underline{22}$ 49

# FIG.6.
NEGATIVE DIAPHRAM DEFORMATION

25 41 46

$\underline{26}$

$-$

40 42

24 46

$\underline{22}$ 49

FIG.8A.

FIG.8B.

FIG.9.

FIG.7